# EUROPEAN PATENT SPECIFICATION

(11) **EP 3 123 489 B1**
(45) Date of publication and mention of the grant of the patent: **08.05.2019**
(21) Application number: 15711022.2
(22) Date of filing: 10.03.2015
(51) Int. Cl.: H01F 41/16, H01F 1/00

(54) **ROTARY PROCESS FOR APPLICATION OF MAGNETIC COMPOSITIONS**
ROTATIONSVERFAHREN ZUR ANWENDUNG VON MAGNETISCHEN ZUSAMMENSETZUNGEN
PROCÉDÉ DE ROTATION POUR APPLICATION DE COMPOSITIONS MAGNÉTIQUES

(30) Priority: 28.03.2014 US 201461971666 P
(43) Date of publication of application: 01.02.2017
(73) Proprietor: MAGNETNOTES, LTD., Toledo, OH 43613 (US)
(72) Inventor: BOUDOURIS, Randall, Sylvania, Ohio 43560 (US); ALBRECHT, Donald E., Roseville, Minnesota 55113 (US)
(74) Representative: Cronin, Brian Harold John
(86) International application number: PCT/US2015/019637
(87) International publication number: WO 2015/148104

(56) References cited:
- GB-A- 1 444 858
- US-A- 5 869 148
- US-A1- 2012 103 506

## Description

### BACKGROUND OF THE INVENTION

The present invention relates to compositions and methods of making magnets that will self-adhere to a magnetically attracted surface.

Flexible permanent magnetic materials are often supplied in the form of sheets or rolls and have been commercially available for many years. These materials are typically prepared by mixing a powdered ferrite material with a suitable polymeric or plastic binder into a uniform mixture. The polymeric materials are often elastomers, and the process is therefore typically accomplished through the use of sheet extrusion or calendering. The mixture is converted into strip or sheet form, providing a permanent stable product that is usually somewhat flexible, and that can readily be handled and made into elements of any desired shape by cutting and/or stamping.

The magnets may take on any geometric shape including round, square, rectangular, triangular, etc., as well as any animal shape such as dog, cat, frog, camel, horse, etc., articles of manufacture such as tools, cars, snowmobiles, etc. Using the present method, the shape of the resultant magnet that may be selected is infinite.

The magnetic material is permanently magnetized so that the resulting elements can act individually as permanent magnets, the magnetic field being of sufficient strength that they will adhere to a magnetically attracted surface, such as the surface of an iron or steel sheet, even through a sheet of paper or thin cardboard. Many magnetic materials and the resultant sheet materials are typically inherently dark in color and it is therefore usual to attach these magnets to a printable substrate such as paper or plastic by gluing.

These magnetic pieces may then be placed on a magnetically attracted surface such as a refrigerator, file cabinet, or other surface where they may be used as reminders and are often used to hold sheets of paper such as notes, recipes, lists, children's artwork, reminders, and so on.

In the usual manufacture of these items, multiple producers are involved in the process. For example, a printer produces the printed matter on wide web presses or individual sheets. If in web form, the web is cut into individual sheets and then shipped to a magnet manufacturer where the magnetic material and the printed matter are joined through the use of an adhesive layer. Alternatively, the printer may purchase or otherwise obtain magnets and then join the printed matter to the magnets through the use of an adhesive layer, or may have both pieces shipped to a third party where the pieces may be joined through the use of an adhesive layer.

US Patent Nos. 7,128,798 and US 7,338,573 disclose methods of directly and continuously applying a magnetizable composition to a substrate.

There remains a need in the art for improved methods of making magnets.

### SUMMARY OF THE INVENTION

In one aspect, the present invention relates to a method of making a magnet comprising an indirect rotary printing or coating method.

In one embodiment, the present invention relates to a method of making a magnet comprising the method comprising providing a magnetic composition comprising a thermoplastic polymer material and magnetizable particles, heating the magnetic composition to a temperature at which the magnetic composition is in a flowable state, providing said magnetic composition to a rotating cylinder through a stationary flat nozzle, the rotating cylinder comprising a series of openings therein, providing a substrate in the form of a moving web or sheet and contacting the rotating cylinder with the substrate, wherein the flat nozzle forces the magnetic composition through the openings in the rotating cylinder and the magnetic composition adheres to the substrate.

In another aspect, the present invention relates to a method of making an article comprising a magnetically receptive material comprising providing a composition comprising a thermoplastic polymer material and magnetite, heating the composition to a temperature at which the magnetic composition is in a flowable state, providing the composition to a cavity of a rotating cylinder through a stationary flat nozzle, the cavity of the rotating cylinder is defined by the cylinder wall, the cylinder wall of the rotating cylinder comprising a plurality of openings therethrough, providing a substrate in the form of a moving web or sheet and contacting the rotating cylinder with the substrate, wherein the flat nozzle forces the composition through the plurality of openings in the rotating cylinder and the composition adheres to the substrate in the shape of each of the plurality of openings.

As an example, the present disclosure relates to a method of making a magnet, the method comprising providing a magnetizable composition comprising at least one thermoset polymer material and magnetizable particles, providing the magnetic composition to a cavity of a rotating cylinder through a stationary flat nozzle, the cavity of the rotating cylinder is defined by the cylinder wall, the cylinder wall of the rotating cylinder comprising a plurality of openings therethrough, providing a substrate in the form of a moving web or sheet, contacting the rotating cylinder with the substrate and facilitating curing of the thermoset polymer material, wherein the flat nozzle forces the magnetic composition through the plurality of openings in the rotating cylinder and the magnetic composition adheres to the substrate in the shape of each of the plurality of openings, prior to facilitating curing of the thermoset material.

The thermoset polymer composition and method may also be employed with magnetic receptive materials.

These and other aspects, embodiments and advantages of the present disclosure will become immediately apparent to those of ordinary skill in the art upon review of the Detailed Description and Claims to follow.

### BRIEF DESCRIPTION OF THE DRAWINGS

FIG. 1 illustrates an embodiment of a rotary cylinder that can be employed for forming individual magnets on a moving substrate according to the invention.
FIG. 2 is a perspective view of one embodiment of a package having a magnetic closure formed according to the process disclosed herein.
FIG. 3 is a perspective view of another embodiment of a package having a magnetic closure formed according to the process disclosed herein.
FIG. 4 is a perspective view of another embodiment of a package having a magnetic closure formed according to the process disclosed herein.

### DETAILED DESCRIPTION OF THE INVENTION

While embodiments of the present disclosure may take many forms, there are described in detail herein specific embodiments of the present disclosure. This description is an exemplification of the principles of the present disclosure and is not intended to limit the disclosure to the particular embodiments illustrated.

The present invention relates to a method of making a magnetic article using an indirect method of printing or coating a magnetizable composition using a rotary cylinder comprising holes therethrough for applying the magnetizable composition to a substrate in any shape desired or form.

The present method eliminates the need for cutting the magnetizable material into the desired shape and size. Magnetizable materials that can be subjected to a magnetic field and permanently magnetized have high loadings of magnetic particulates which causes rapid wear of cutting blades.

Suitably, the resultant magnet has a strength of at least about 39,3701g/cm (100g/inch) when using an Imada DPS-1 force gauge and pulling the magnet from a 10.16cm x 10.16cm (4x4") steel plate, and more suitably at least about 78,7402g/cm (200g/inch).

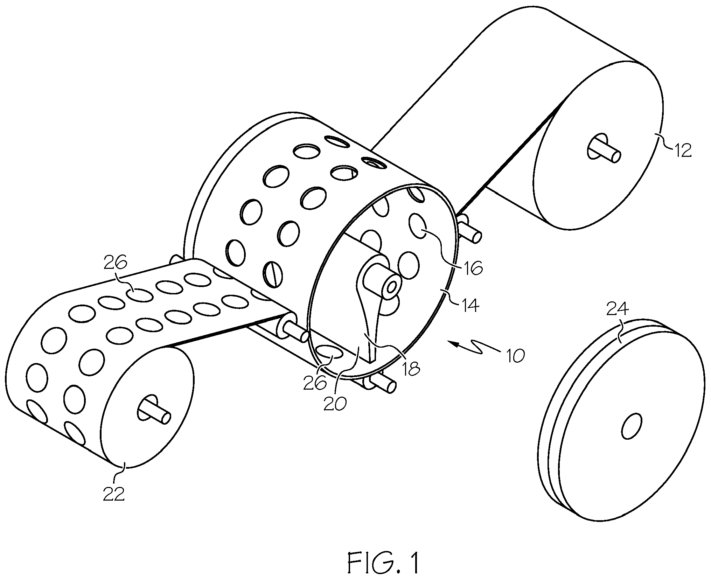

Turning now to the figures, FIG. 1 illustrates one embodiment of a rotary printing cylinder 14 used in a roll-to-roll or web coating line for indirect printing or coating of a magnetizable composition onto a moving substrate.

A web of substrate 12 is fed from a supply roll 12 to a roll 22 opposite of the coating station. Coating station 10 includes a rotary printing cylinder 14, having a plurality of holes 16 which extend through the cylinder wall. Magnetizable composition is fed through a flat nozzle 18 that includes a doctor blade or slot die 20 which scrapes the inner surface of the cylinder forcing magnetizable composition into the holes 16. The magnetizable composition contacts the moving substrate 12 and remains on the substrate 12 as it loses contact with rotating cylinder 14 at point 28, and a plurality of individual magnetizable articles 26 are formed thereon. Cover 24 can be placed on the rotary cylinder 14 to retain the magnetic composition therein.

The magnetizable composition suitably includes about 70 wt-% or more of the magnetic material as to have a sufficient attractive force for practical uses. However, it is usually impractical to employ more than 95 wt-% of the magnetic material because of production concerns, and also because of the difficulty of retaining more than this in the binder material. Furthermore, including more than about 95 wt-% of the magnetic material may lead to a rougher surface. The magnetic material is often supplied in a powder form.

Suitably, the magnetizable composition comprises about 70 wt-% to about 95 wt-% of the magnetizable particles and about 5 wt-% to about 30 wt-% of at least one polymer material.

In some embodiments, the magnetic composition comprises about 80 wt-% to about 90 wt-% of the magnetizable particles and about 10 wt-% to about 20 wt-% of at least one polymer material.

The magnetic strength of the finished product is a function of the amount of magnetic material or powder in the mix, the surface area, thickness, and method of magnetization (e.g. whether it is aligned or not).

Any magnetic material may be employed herein. Magnetic materials which are particularly suitable for use herein include the ferrites having the general formula (M²⁺O6Fe₂O₃) MFe₁₂O₁₉ where M represents Ba or Sr.

Other examples of magnetic materials suitable for use herein include a rare earth-cobalt magnet of RCO₅ where R is one or more of the rare earth elements such as Sm or Pr, yttrium (Y), lanthanum (La), cerium (Ce), and so forth.

Other specific examples of magnetic materials include, for instance, manganese-bismuth, manganese-aluminum, and so forth.

The method of the present invention is not limited to any particular magnetic material, and the scope of the invention is therefore not intended to be limited as such. While the above described materials find particular utility in the process of the present invention, other materials which are readily permanently magnetized may also find utility herein.

In some embodiments, the method employs a composition comprising a thermoplastic polymer and a magnetically receptive material. Suitable magnetically receptive materials include magnetite, which is one example of naturally occurring iron oxides having the chemical formula Fe₃O₄. Articles made from these compositions can be employed to adhere magnetic articles thereto.

The thermoplastic material, often referred to in the industry as a thermoplastic binder, suitable for use in the process of the present invention may include any polymeric material that is readily processable with the magnetic material on, for instance, the thermoplastic or hot melt processing equipment as described in detail below. Such thermoplastic materials include both thermoplastic elastomers and non-elastomers or any mixture thereof.

The thermoplastic composition may be selected based on, for one, the type of printable substrate which is being used, and the adhesion obtained between the thermoplastic composition and the printable substrate.

Examples of thermoplastic elastomers suitable for use herein include, but are not limited to, natural and synthetic rubbers and rubbery block copolymers, such as butyl rubber, neoprene, ethylene-propylene copolymers (EPM), ethylene-propylene-diene polymers (EPDM), polyisobutylene, polybutadiene, polyisoprene, styrene-butadiene (SBR), styrene-butadienestyrene (SBS), styrene-ethylene-butylene-styrene (SEBS), styrene-isoprene-styrene (SIS), styrene-isoprene (SI), styrene-ethylene/propylene (SEP), polyester elastomers, polyurethane elastomers, to mention only a few, and so forth and mixtures thereof. Where appropriate, included within the scope of this invention are any copolymers of the above described materials.

Examples of suitable commercially available thermoplastic elastomers such as SBS, SEBS, or SIS copolymers include KRATON□ G (SEBS or SEP) and KRATON□ D (SIS or SBS) block copolymers available from Kraton Polymers; VECTOR® (SIS or SBS) block copolymers available from Dexco Chemical Co.; and FINAPRENE® (SIS or SBS) block copolymers available from Atofina.

Some examples of non-elastomeric polymers include, but are not limited to, polyolefins including polyethylene, polypropylene, polybutylene and copolymers and terpolymers thereof such as ethylene vinyl acetate copolymers (EVA), ethylene n-butyl acrylates (EnBA), ethylene methyl (meth) acrylates including ethylene methyl acrylates (EMA), ethylene ethyl (meth) acrylates including ethylene ethyl acrylates (EEA), interpolymers of ethylene with at least one C₃ to C₂₀ alphaolefin, polyamides, polyesters, polyurethanes, to mention only a few, and so forth, and mixtures thereof. Where appropriate, copolymers of the above described materials also find utility herein.

Examples of polymers useful herein may be found in document US 6262174. Polymeric compositions exhibiting high hot tack have been found to be particularly suitable for use herein. Hot tack is a term of art known to those of ordinary skill.

Examples of commercially available non-elastomeric polymers include EnBA copolymers available from such companies as Atofina under the tradename of Lotryl® available from Arkema in the King of Prussia, PA, from ExxonMobil Chemical in Houston, TX under the tradename of Escorene™, from DuPont de Nemours & Co. in Wilmington, DE under the tradename of Elvaloy®; EMA copolymers available from ExxonMobil Chemical under the tradename of Optema™; EVA copolymers are available from DuPont™ under the tradename of Elvax® and from Lyondell Blassell in Houston, TX under the tradename of Ultrathene® to name only a few.

Polyolefins or polyalphaolefins can be employed herein, or copolymers or terpolymers thereof. Examples of useful polyolefins include, but are not limited to, amorphous (i.e. atactic) polyalphaolefins (APAO) including amorphous propylene homopolymers, propylene/ethylene copolymers, propylene/butylene copolymers and propylene/ethylene/butylene terpolymers; isotactic polyalphaolefins; and linear or substantially linear interpolymers of ethylene and at least one alpha-olefin including, for instance, ethylene and 1-octene, ethylene and 1-butene, ethylene and 1-hexene, ethylene and 1-pentene, ethylene and 1-heptene, and ethylene and 4-methyl-1-pentene and so forth. In some embodiments, it may be preferable to employ a small amount of another polymer in combination with the polyalphaolefin such as maleic anhydride grafted polymers which have been used to improve wetting and adhesion. Other chemical grafting can be used, but maleic anhydride is by far the most common. Usually only a few percent in grafting (1-5%) are used and most tend to be ethylene or propylene copolymers.

Thermoset polymer materials may also be employed which are cured in a variety of manners such as moisture cure, radiation cure, two-part chemical reactions, heat, and so forth to form substantially insoluble or infusible materials. Such materials are well known in the art.

Thermoset polymers crosslink and/or polymerize by energy or by chemical means and by a wide variety of mechanisms including, but not limited to, moisture cure, thermal and radiation cure, condensation, free radical systems, oxidative cures, etc. as well as combinations thereof.

Some examples of suitable thermoset materials include, but are not limited to, polyurethanes, polyureas, polyurethane/polyurea hybrids, epoxies, acrylics, polyesters, (meth)acrylates, cyanoacrylates, silicones (polysiloxanes), polyolefins and copolymers thereof such as ethylene vinyl acetate copolymers, rubbers including rubbery block copolymers, etc.

Each of class of thermoset material may come in a variety of different systems, including, for example, one and two part systems, and radiation curing systems such as radiation (e.g. UV) curing systems, moisture cure, etc.

In some examples, the magnetic composition includes a multicomponent epoxy or urethane thermoset composition.

The thermoset polymer compositions may also be employed in combination with magnetic receptive particle materials.

In some examples, the thermoset polymer composition is cured using electron beam (e-beam) radiation. Crosslinking of polymer based products via e-beam radiation improves mechanical, thermal and chemical properties. Specifically, thermal resistance to temperature degradation and aging and low temperature impact resistance are improved.

Tensile strength, modulus, abrasion resistance, resistance to creep, stress crack resistance, resistance to high pressure, and so forth are increased.

Polymers which are commonly crosslinked using the electron beam irradiation process include polyvinyl chloride (PVC), thermoplastic polyurethanes and elastomers (TPUs), polybutylene terephthalate (PBT), polyamides/nylon (PA66, PA6, PA11, PA12), polyvinylidene fluoride (PVDF), (meth)acrylates, polymethylpentene (PMP), polyethylenes (LLDPE, LDPE, MDPE, HDPE, UHMWPE), and ethylene copolymers such as ethylene-vinyl acetate (EVA) and ethylene tetrafluoroethylene (ETFE). Some of the polymers utilize additives to make the polymer more readily irradiation crosslinkable.

The above thermoset materials may include monomers, dimers, oligomers and polymers, as well as combinations thereof as is known to those of ordinary skill in the art.

Other suitable additives can be employed in the magnetizable composition as well such as antioxidants and processing aids. One of ordinary skill in the art is knowledgeable as to hot melt additives.

The polymer material and the magnetizable particles can be added to and melted in mixer or an extruder, or can be supplied in the form of pre-made pellets.

The magnetizable composition is heated to a temperature at which it is molten or flowable using any suitable hot melt or thermoplastic equipment such as a heated mixer with counter rotating blades.

The mixture is then supplied to a melt pump or small extruder via any suitable means such as an auger.

The mixture is then pumped from the melt pump or extruder via a heated hose to the flat nozzle head 18 shown in FIG. 1 above.

The doctor blade 20 of the flat nozzle head 18 scrapes the magnetizable composition into the holes 16 of the rotating cylinder 14 and into contact with the moving substrate 12 wherein it preferentially adheres rather than to the rotating cylinder 14.

The cylinder may be formed of any suitable metal or metal alloy thereof including, but not limited to, stainless steel, titanium and alloys thereof, cobalt and alloys thereof, chromium and alloys thereof, and so forth.

The above list is intended for illustrative purposes only and not as a limitation on the scope of the present invention.

The metal or metal alloy can be reinforced with fibers or nanomaterials including, but not limited to, carbon or ceramic fibers or nanotubes or fullerene nanotubes. Many suitable materials can be employed for forming reinforcement fibers or nanofibers and these exemplary materials are not intended as a limitation on the scope of the present invention.

The compositions according to the invention can be applied to the moving substrate 12 at a high rate of line speed of from about 15,24 m/minute (50 feet/minute) to about 304,8 m/minute (100 feet/minute), suitable greater than about 24,384 m/minute (80 feet/minute) to about 152,4 m/ minute (500 feet/minute).

The present invention provides significant advantages over prior art methods including less waste, flexibility of design, elimination of wear and replacement of die cutting heads because there is no need to cut through the abrasive magnetizable composition, the ability to print to rolls or sheets, the ability to spot print any shape or form desired, and lower equipment costs due to the simplicity of design.

The present invention finds utility in making any magnetized substrate, particularly printed substrates.

The process according to the invention can be employed to make any printed substrate and finds particular utility for those substrates formed from paper, paper products or pasteboard. However, other materials can be employed as well including, but not limited to, plastic or polymeric materials, metal, release liners such as silicone release liner, textiles or fabrics, and so forth. Combinations of any of the substrates may also be employed.

In particular embodiments, the substrate is a layered or laminated substrate and includes paper, paper products or pasteboard and a foil wrap.

In some embodiments, the printed substrates are packages. The magnetically reclosable packages disclosed herein may find utility for any items, and particularly for reclosable packages for consumable food items. In particular, the present invention finds utility for reclosable packages wherein it is desired that the contents not spill out of the package.

For example, magnetically reclosable packages for snack foods such as crackers and chips, breakfast foods such as cereal, tobacco products such as cigarette boxes, candy and chewing gum, and so forth.

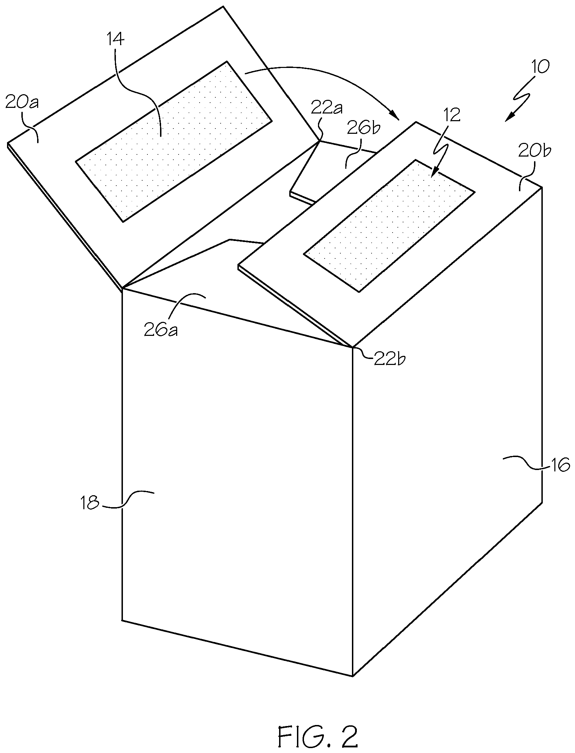

FIG. 2 is a perspective view of one embodiment of a magnetically reclosable package 10 according to the invention, in this embodiment, package 10 has a basic box configuration with opposing sides 18 interconnected by opposing sides 16. Box 10 also has two opposing side flaps 26a, 26b which fold inward first to close box 10. Flap 20b is then be folded down at fold 22b. Flap 20b has a magnetic strip 12. Flap 20a has an opposing magnetic strip 14 which overlaps with magnetic strip 12 on flap 20b which when folded down at fold 22a magnetically secures the flaps 20a and 20b together.

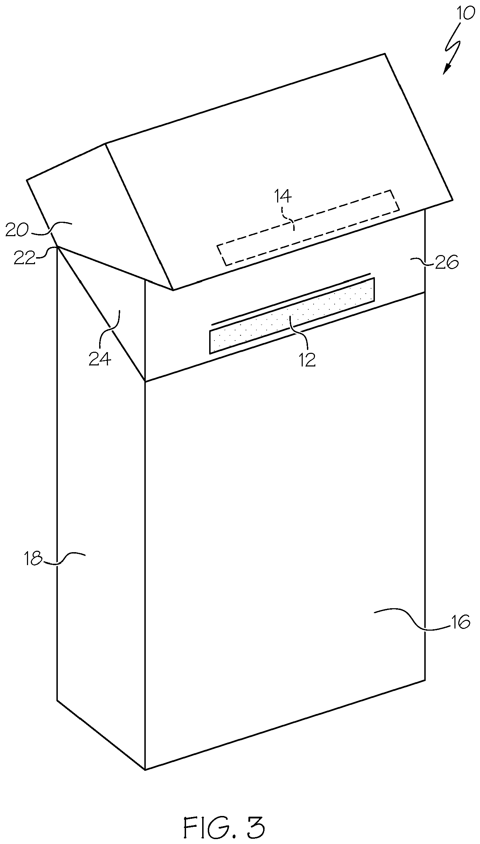

FIG. 3 is an alternative embodiment of a box or carton 10 which can be formed of one or more foldable blanks. In this embodiment, box 10 includes a bottom portion having opposing sides 18 and opposing sides 16 and an inner foldable blank 20, is disposed within box 10. Inner blank 20 includes a magnetic strip 26. Box 10 includes a top portion 18 which opens and closes. On the inner surface of top 18 is a magnetic strip 24 which overlaps magnetic strip 26 when the top 18 is closed. Inner foldable blank 20 also includes a cut out portion 22 for more easily retrieving items when top 18 is open.

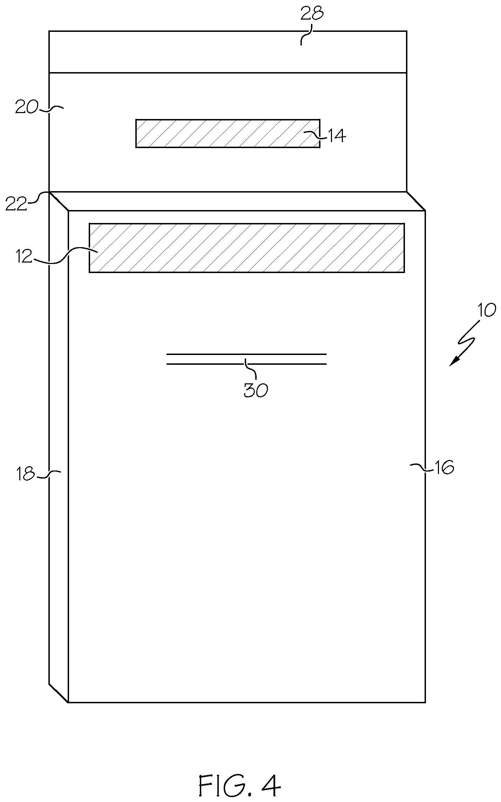

FIG. 4 is an alternative embodiment of a box or carton 10 which is formed of one or more foldable blanks. In this embodiment, one foldable blank is employed. Box 10 includes two opposing side portions 18 and a front portion 16 disposed therebetween. Back portion disposed between two opposing side portions is not seen in this view. Front portion 16 has a magnetic portion 12 and a slit 30. Flap 20 has an upper portion 28 and is foldable at 22. Flap 20 also has a magnetic strip 14. When flap 20 is closed, magnetic strip 14 overlaps magnetic strip 12 and top portion 28 of flap 20 can be disposed within slit 30 of box 10, both the overlapping magnetic strips and the top portion 28 of flap 20 secure box 10 in a closed state.

The packages may be permanently sealed at all but one end wherein the package is opened and a reclosable seal is formed via the use of a magnetic region. The permanent seals may be formed using any conventional method known in the art including by folding or with an adhesive, for example.

Packages of this type are disclosed in US Patent Pub. No. 2014/0008425 and in WO 2014/096427.

Other examples of printed material include, but are not limited to, promotional pieces, greeting cards, postcards, magnetic business cards, appointment reminder cards, announcements, advertisements, coupons, labels, calendars, picture frames, and so forth which have a magnetic surface joined to a printed surface which may be self-adhered or self-sticking to a metallic surface for display. Examples of this type of substrate can be found in commonly assigned US Patent Nos. 7,128,798 and 7,338,573.

The thickness of the magnetic strips, whether one is employed or two as in the case of providing a seal for a package and such, is between about 100 microns and about 750 microns, suitably about 100 microns to about 600 microns and most suitably about 100 microns to about 400 microns.

The present method is advantageous because the substrate can be coated and printed in a single inline process.

Previous methods, in contrast, printed the coated substrates off-line which is less efficient and more costly.

One of ordinary skill in the art will recognize that these are only examples of numerous sizes and shapes of packages which can be employed herein without deterring from the scope of the present invention.

## Claims

1. A method of making a magnet, the method comprising:
a) providing a magnetizable composition comprising at least one thermoplastic polymer material and magnetizable particles;
b) heating the magnetic composition to a temperature at which the magnetic composition is in a flowable state;
c) providing the magnetic composition to a cavity of a rotating cylinder through a stationary flat nozzle (18), the cavity of the rotating cylinder is defined by the cylinder (14) wall, the cylinder wall of the rotating cylinder comprising a plurality of openings (16) therethrough;
d) providing a substrate (12) in the form of a moving web or sheet; and
e) contacting the rotating cylinder (14) with the substrate (12);
wherein the flat nozzle (18) forces the magnetic composition through the plurality of openings (16) in the rotating cylinder (14) and the magnetic composition adheres to the substrate (14) in the shape of each of the plurality of openings (16).

2. The method of claim 1 wherein the cylinder (14) is defined by a wall thickness of 100 microns to 750 microns.

3. The method of claim 1 or 2 comprising heating the magnetic composition to a temperature of 150° C to 350° C.

4. The method of claim 1, 2, or 3 wherein the magnetic composition comprises 70% to 95% by weight of magnetizable particles and 5% to 30% by weight of polymer material.

5. The method of any preceding claim wherein said polymer material comprises at least one member selected from the group consisting of homopolymers, copolymers and terpolymers of olefins, esters, ethers, urethanes, amides, and mixtures thereof.

6. The method of claim 5 wherein said polymer material comprises at least one homopolymer, copolymer or terpolymer of olefins, in particular a copolymer of ethylene, and more in particular a copolymer of ethylene that comprises at least one member selected from the group consisting of vinyl acetate, n-butyl acrylate, methyl(meth)acrylate, ethyl (meth)acrylate, 2-ethylhexyl (meth)acrylate, (meth)acrylate, (ethyl)acrylate, and acrylic acid.

7. The method of any preceding claim comprising providing the magnetizable composition in pellet form.

8. The method of any preceding claim comprising providing the magnetizable composition to a heated mixer comprising rotating blades, optionally further comprising the step of feeding the magnetizable composition to a melt pump or extruder with an auger, in particular further comprising pumping the magnetizable composition through a heated hose to the stationary flat nozzle in the cavity of the rotating cylinder.

9. The method of any preceding claim wherein the openings (16) are formed in any specified shape and wherein the magnetizable composition adheres to the substrate in the specified shape.

10. The method of any preceding claim comprising moving the substrate at a rate of 15.24 m/minute to 304.8 m/minute (50 feet/minute to 1000 feet/minute).

11. The method of any preceding claim further comprising permanently magnetizing the magnetizable composition.

12. The method of any preceding claim comprising neutralizing the magnetizable composition in particular
comprising permanently magnetizing the magnetizable composition after neutralizing.

13. The method of any preceding claim wherein the magnetic composition is adhered to the substrate as the substrate is no longer contacting the rotating cylinder.

14. The method of any preceding claim further comprising smoothing the magnetizable composition, chilling the magnetizable composition or both.

15. A method of making an article comprising a magnetically receptive material, the method comprising:
a) providing a composition comprising a thermoplastic polymer material and magnetite;
b) heating the composition to a temperature at which the magnetic composition is in a flowable state;
c) providing the composition to a cavity of a rotating cylinder (14) through a stationary flat nozzle (18), the cavity of the rotating cylinder (14) is defined by the cylinder wall, the cylinder wall of the rotating cylinder comprising a plurality of openings (16) therethrough;
d) providing a substrate (12) in the form of a moving web or sheet; and
e) contacting the rotating cylinder with the substrate;
wherein the flat nozzle forces the composition through the plurality of openings in the rotating cylinder and the composition adheres to the substrate in the shape of each of the plurality of openings.

## Patentansprüche

1. Verfahren zur Herstellung eines Magneten, wobei das Verfahren folgendes umfasst:
a) Bereitstellung einer magnetisierbaren Zusammensetzung, die mindestens ein thermoplastisches Polymermaterial und magnetisierbaren Teilchen umfasst;
b) Erhitzung der magnetischen Zusammensetzung auf eine Temperatur, bei welcher die magnetische Zusammensetzung in einem fließfähigen Zustand ist;
c) Leiten der magnetischen Zusammensetzung zu einem Hohlraum eines rotierenden Zylinders durch eine stationäre flache Düse (18) hindurch, wobei der Hohlraum des rotierenden Zylinders durch die Wand des Zylinders (14) definiert ist, wobei die Zylinderwand des rotierenden Zylinders eine Vielzahl von Öffnungen (16) umfasst, die sich durch sie erstrecken;
d) Bereitstellung eines Substrats (12) in Form eines sich bewegenden Gewebes oder Blatts; und
e) Bringen des rotierenden Zylinders (14) in Kontakt mit dem Substrat (12);
wobei die flache Düse (18) die magnetische Zusammensetzung durch die Vielzahl von Öffnungen (16) in dem rotierenden Zylinder (14) zwingt und die magnetische Zusammensetzung an dem Substrat (14) in Gestalt jeder der Vielzahl von Öffnungen (16) haftet.

2. Verfahren nach Anspruch 1, wobei der Zylinder (14) durch eine Wandstärke von 100 Mikron bis 750 Mikron definiert ist.

3. Verfahren nach Anspruch 1 oder 2 mit Erhitzung der magnetischen Zusammensetzung auf eine Temperatur von 150° C bis 350° C.

4. Verfahren nach Anspruch 1, 2 oder 3, wobei die magnetische Zusammensetzung 70% bis 95% in Gewicht von magnetisierbaren Teilchen und 5% bis 30% in Gewicht von Polymermaterial umfasst.

5. Verfahren nach einem beliebigen der vorhergehenden Ansprüche, wobei besagtes Polymermaterial mindestens eines aus der folgenden Gruppe umfasst: Homopolymere, Kopolymere und Terpolymere von Olefinen, Estern, Ether, Urethane, Amide und Mischungen davon.

6. Verfahren nach Anspruch 5, wobei besagtes Polymermaterial mindestens ein Homopolymer, Kopolymer oder Terpolymer von Olefinen umfasst, insbesondere ein Äthylenkopolymer, und ganz besonders ein Äthylenkopolymer, das mindestens eines aus der folgenden Gruppe umfasst: Vinylazetat, n-butyl-Acrylat, Methyl(meth)acrylat, Äthyl(meth)acrylat, 2-ethylhexyl(meth)acrylat, (Meth)acrylat, (Ethyl)acrylat und Akrylsäure.

7. Verfahren nach einem beliebigen der vorhergehenden Ansprüche mit Bereitstellung der magnetisierbaren Zusammensetzung in Pelletform.

8. Verfahren nach einem beliebigen der vorhergehenden Ansprüche mit Bereitstellung der magnetisierbaren Zusammensetzung für einen beheizten Mischer mit rotierenden Schaufeln, optional des Weiteren umfassend die Phase des Zuführens der magnetisierbaren Zusammensetzung zu einer Schmelzepumpe oder Strangpresse mit einem Erdbohrer, insbesondere des Weiteren umfassend das Pumpen der magnetisierbaren Zusammensetzung durch einen beheizten Schlauch zu der stationären flachen Düse in dem Hohlraum des rotierenden Zylinders.

9. Verfahren nach einem beliebigen der vorhergehenden Ansprüche, wobei die Öffnungen (16) in jeder beliebigen angegebenen Gestalt gebildet sind, und wobei die magnetisierbare Zusammensetzung an dem Substrat in der angegebenen Form haftet.

10. Verfahren nach einem beliebigen der vorhergehenden Ansprüche, umfassend die Bewegung des Substrats mit einer Geschwindigkeit von 15.24 m/Minute bis 304.8 m/Minute (50 Fuß/Minute bis 1000 Fuß/Minute).

11. Verfahren nach einem beliebigen der vorhergehenden Ansprüche, das des Weiteren die ständige Magnetisierung der magnetisierbaren Zusammensetzung umfasst.

12. Verfahren nach einem beliebigen der vorhergehenden Ansprüche mit Neutralisierung der magnetisierbaren Zusammensetzung, insbesondere mit ständiger Magnetisierung der magnetisierbaren Zusammensetzung nach der Neutralisierung.

13. Verfahren nach einem beliebigen der vorhergehenden Ansprüche, wobei die magnetische Zusammensetzung an dem Substrat haftet, wenn das Substrat nicht mehr den rotierenden Zylinder kontaktiert.

14. Verfahren nach einem beliebigen der vorhergehenden Ansprüche, das des Weiteren folgendes umfasst: Glätten der magnetisierbaren Zusammensetzung, Kühlung der magnetisierbaren Zusammensetzung oder beides.

15. Verfahren zur Herstellung eines Artikels umfassend ein magnetisch aufnahmefähiges Material, wobei das Verfahren folgendes umfasst:
a) Bereitstellung einer Zusammensetzung mit einem thermoplastischen Polymermaterial und Magnetit;
b) Erhitzung der Zusammensetzung auf eine Temperatur, bei welcher die magnetische Zusammensetzung in einem fließfähigen Zustand ist;
c) Leitung der Zusammensetzung zu einem Hohlraum eines rotierenden Zylinders (14) durch eine stationäre flache Düse (18) hindurch, der Hohlraum des rotierenden Zylinders (14) ist durch die Zylinderwand definiert, die Zylinderwand des rotierenden Zylinders umfasst eine Vielzahl von Öffnungen (16), die sich durch sie erstrecken;
d) Bereitstellung eines Substrats (12) in Form eines sich bewegenden Gewebes oder Blatts; und
e) Bringen des rotierenden Zylinders in Kontakt mit dem Substrat;
wobei die flache Düse die Zusammensetzung durch die Vielzahl von Öffnungen in dem rotierenden Zylinder zwingt und die Zusammensetzung an dem Substrat in Gestalt von jeder der Vielzahl von Öffnungen haftet.

## Revendications

1. Méthode de fabrication d'un aimant, la méthode comprenant:
a) la fourniture d'une composition magnétisable comprenant au moins un matériau de polymère thermoplastique et des particules magnétisables;
b) le chauffage de la composition magnétique à une température à laquelle la composition magnétique est dans un état fluide;
c) la fourniture de la composition magnétique à une cavité d'un cylindre pivotant à travers un gicleur plat stationnaire (18), la cavité du cylindre pivotant est définie par la paroi du cylindre (14), la paroi de cylindre du cylindre pivotant comprenant une pluralité d'ouvertures (16) à travers cela;
d) la fourniture d'un substrat (12) dans la forme d'une toile ou feuille mobile; et
e) la mise en contact du cylindre pivotant (14) avec le substrat (12);
où le gicleur plat (18) force la composition magnétique à travers la pluralité d'ouvertures (16) dans le cylindre pivotant (14) et la composition magnétique adhère au substrat (14) dans la forme de chacune de la pluralité d'ouvertures (16).

2. Méthode de la revendication 1 où le cylindre (14) est défini par une épaisseur de paroi de 100 microns à 750 microns.

3. Méthode de la revendication 1 ou 2 comprenant le chauffage de la composition magnétique à une température de 150°C à 350°C.

4. Méthode de la revendication 1, 2, ou 3 où la composition magnétique comprend 70% à 95% en poids de particules magnétisables et 5% à 30% en poids de matériau de polymère.

5. Méthode de l'une quelconque des revendications précédentes où ledit matériau de polymère comprend au moins un élément sélectionné du groupe composé d'homopolymères, copolymères et terpolymères d'oléfines, esters, éthers, uréthanes, amides, et mélanges de cela.

6. Méthode de la revendication 5 où ledit matériau de polymère comprend au moins un homopolymère, copolymère ou terpolymère d'oléfines, en particulier un copolymère d'éthylène, et plus en particulier un copolymère d'éthylène qui comprend au moins un élément sélectionné du groupe composé d'acétate de vinyle, acrylate de n-butyle, (méth)acrylate de méthyle, (méth)acrylate d'éthyle, (méth)acrylate de 2-éthylhexyle, (méth)acrylate, (éthyl)acrylate, et acide acrylique.

7. Méthode de l'une quelconque des revendications précédentes comprenant la fourniture de la composition magnétisable en forme de grains.

8. Méthode de l'une quelconque des revendications précédentes comprenant la fourniture de la composition magnétisable à un mélangeur chauffé comprenant des lames pivotantes, de façon facultative comprenant en outre la phase d'alimentation de la composition magnétisable à une pompe à masse fondue ou extrudeuse avec une tarière, en particulier comprenant en outre le pompage de la composition magnétisable à travers un tuyau flexible chauffé au gicleur plat stationnaire dans la cavité du cylindre pivotant.

9. Méthode de l'une quelconque des revendications précédentes où les ouvertures (16) sont formées dans n'importe quelle forme spécifiée et où la composition magnétisable adhère au substrat dans la forme spécifiée.

10. Méthode de l'une quelconque des revendications précédentes comprenant le déplacement du substrat à une vitesse de 15,24 m/minute à 304,8 m/minute (50 pieds/minute à 1000 pieds/minute).

11. Méthode de l'une quelconque des revendications précédentes comprenant en outre la magnétisation en permanence de la composition magnétisable.

12. Méthode de l'une quelconque des revendications précédentes comprenant la neutralisation de la composition magnétisable en particulier comprenant la magnétisation en permanence de la composition magnétisable après la neutralisation.

13. Méthode de l'une quelconque des revendications précédentes où la composition magnétique est adhérée au substrat quand le substrat n'est plus en contact avec le cylindre pivotant.

14. Méthode de l'une quelconque des revendications précédentes comprenant en outre l'adoucissement de la composition magnétisable, le refroidissement de la composition magnétisable ou les deux.

15. Méthode de fabrication d'un article comprenant un matériau magnétiquement réceptif, la méthode comprenant:
a) la fourniture d'une composition comprenant un matériel de polymère thermoplastique et de la magnétite;
b) le chauffage de la composition à une température à laquelle la composition magnétique est dans un état fluide;
c) la fourniture de la composition à une cavité d'un cylindre pivotant (14) à travers un gicleur plat stationnaire (18), la cavité du cylindre pivotant (14) est définie par la paroi du cylindre, la paroi de cylindre du cylindre pivotant comprenant une pluralité d'ouvertures (16) à travers cela;
d) la fourniture d'un substrat (12) dans la forme d'une toile ou feuille mobile ; et
e) la mise en contact du cylindre pivotant avec le substrat;
où le gicleur plat force la composition à travers la pluralité d'ouvertures dans le cylindre pivotant et la composition adhère au substrat dans la forme de chacune de la pluralité d'ouvertures.
